Europäisches Patentamt

European Patent Office

Office européen des brevets

(19)

(11) Numéro de publication: **0 106 708**
**B1**

(12) **FASCICULE DE BREVET EUROPEEN**

(45) Date de publication du fascicule du brevet: **03.05.89**

(51) Int. Cl.⁴: **H 01 B 7/34**

(21) Numéro de dépôt: **83400402.0**

(22) Date de dépôt: **28.02.83**

(54) **Revêtement isolant.**

(30) Priorité: **15.10.82 FR 8217435**

(43) Date de publication de la demande:
**25.04.84 Bulletin 84/17**

(45) Mention de la délivrance du brevet:
**03.05.89 Bulletin 89/18**

(84) Etats contractants désignés:
**BE DE GB IT NL SE**

(56) Documents cités:
**DE-A-2 700 672**
**FR-A-1 530 291**
**GB-A-1 583 954**
**US-A-2 691 694**

(73) Titulaire: **AXON'CABLE S.A.**
**Route de Châlons**
**F-51210 Montmirail (FR)**

(72) Inventeur: **Puzo, Joseph**
**Habia Câbles S.A. Route de Châlons**
**F-51210 Montmirail (FR)**

(74) Mandataire: **Portal, Gérard et al**
**Cabinet Beau de Loménie 55, rue d'Amsterdam**
**F-75008 Paris (FR)**

Courier Press, Leamington Spa, England.

EP 0 106 708 B1

**Description**

La présente invention concerne un revêtement isolant conservant ses caractéristiques diélectriques sur une très large plage de températures.

Les impératifs de sécurité exigent que, dans certains cas d'utilisation, tels que l'on en rencontre dans les industries nucléaires, pétrolières, aéronautiques, spatiales, navales, chimiques, etc. ..., les circuits transportant de l'énergie ou transmettant des signaux de contrôle ou de commande, puissent résister, pendant un temps suffisant, aux températures élevées dues, par exemple, à un incendie ou, pour les circuits électriques, à une élévation anormale de l'intensité du courant électrique qui les traverse, de façon à permettre l'évacuation du personnel et le sauvetage de matériels. Dans le cas de courts-circuits ou de surintensité, ou souhaite que l'augmentation importante de température du conducteur, voire la fusion de celui-ci, ne provoque pas un incendie par combustion du revêtement.

Pour répondre en tout ou partie à ces exigences, on utilise déjà des revêtements en oéramique associées ou non à des fibres de verre. Par ailleurs, il existe des revêtements, notamment pour les câbles électriques, qui résultent de l'association d'étoffes en fibre de verre et d'oxyde métallique.

Les câbles électriques destinés à ces usages existent sous la forme armés on non armés, selon qu'ils sont de fabrication protégés contre les risques de détérioration d'origine mécanique par un revêtement métallique rigide ou qu'ils doivent être introduits, lors du montage, dans des tubes métalliques destinés à assurer leur protection. Les câbles armés sont constitués d'un ou de plusieurs conducteurs isolés par une substance à faible teneur en carbone, protégés par une carapace cylindrique obtenue par enroulement d'un ruban métallique ou par un tube métallique. Les câbles non armés sont constitués également de conducteurs isolés par des substances à faible teneur en carbone, mais sont gainés par un complexe de fibre de verre et de caoutchouc siliconé out en tout autre matériau non combustible.

Parmi les revêtements isolants présentant une grande résistance aux hautes températures, on peut citer ceux décrits dans les brevets:

—FR—A.2.381.377, qui décrit un revêtement constitué d'un tube métallique bourré de magnésie.

—FR—A.2.257.555, qui décrit un revêtement composé d'une couche de fibres inorganiques non combustibles constituant un isolant thermique et d'une couche d'halogène liés à des fibres non combustible par une résine.

—FR—A.2.462.771, qui décrit un revêtement constitué d'une matière minérale isolante cuite, imprégnée d'huile de silicone, protégé par une gaine métallique.

—FR—A.2.482.769, qui décrit un revêtement isolant, réfractaire, flexible et résistant à la chaleur, composé d'une étoffe poreuse de base, d'un revêtement réfracataire capable de se fondre à l'étoffe poreuse de base à température élevée.

—FR—A.2.206.563, qui décrit une isolation à haute température composée d'un verre de borosilicate et de silice, que l'on fond à haute température pour former une masse ayant une viscosité supérieure à la viscosité du verre et de la silice à la même température.

—FR—A.2.360.530, qui décrit un corps fritté, vitrifiable, à base de verre et de quartz.

—US—A.3.602.636, qui décrit un revêtement constitué par un enrobage hélicoïdal avec une étoffe de verre, à armature ouvertre, portant un revêtement en caoutchouc synthétique, résistant à la flamme, protégé par une gaine en polychlorure de vinyle.

—US—A.3.632.412, qui décrit un ruban auto-adhésif constitué d'un interpolymère doublé d'une toile de verre.

—US—A.3.013.902, qui décrit des étoffes revêtues d'alumine colloidale.

—US—A.3.095.336, qui décrit la préparation de produits céramiques stratifiés avec de l'étoffe de verre.

—EUROPEEN 80.107217.4, qui décrit un revêtement isolant en céramique constitué de polyimide et de mica.

Pour tenter de répondre aux exigences particulièrement sévères de certaines utilisations, notamment sur: les plate-formes de forage, dans les industries minières et les centrales nucléaires, on a imposé des installations en conduites résistant à l'explosion et au feu. Ce type d'installation, bien que limitant les effets d'auto-propagation et le dégagement de fumée, présente l'inconvénient de confiner la chaleur à l'intérieur de la conduite, ce qui a pour effet de détruire l'isolant et de créer des ruptures de câbles ou des courts-circuits.

Par ailleurs, la plupart des revêtements précedemment cités, s'ils assurent la protection des câbles électriques et maintiennent l'isolement indispensable pendant une durée éterminée, ne permettent par la réutilisation ultérieure des installations sans que le remplacement total des câblages ait été, au préalable, effectué. L'effet destructif est encore accentué lorsque des moyens d'extinction tels que la projection d'eau de mer ou le noyage sont utilisés.

Que dire des conduites de fluide, qui alimentent en gaz comprimé ou en liquide hydraulique, des équipements éloignés dont le maintien en fonctionnement est vital. Les tuyauteries souples, généralement utilisées, ne sont que très imparfaitement protégées de la chaleur directe, et leur constitution n'est par conçue pour résister suffisamment longtemps à une élévation de température importante.

La revêtement selon l'invention vise à remédier aux inconvénients précédemment cités, car avec celui-ci, en effet, lors-qu'une température d'environ 1000°C est atteinte, les fibres de verre qui entrent dans sa composition, se transforment en un gel qui se présente sous la forme d'une mousse pâteuse qui constitue une barrière diélectrique et thermique continue qui renforce l'isolement et la protection du conducteur ou du conduit. Après abaissement de la température, cette barrière protectrice se transforme en une couche de mica enrobée de verre, étant donné la disparition, par combustion, du polytétrafluorure d'éthylène.

En conséquence, ce revêtement conserve ses caractéristiques isolantes et son étanchéité, même après destructions des éléments combustibles qui entrent dans sa composition de base (P.T.F.E.); ce qui conserve à l'installation sa valeur opérationnelle même après un incendie. Cette particularité revêt une importance capitale pour la commande à distance de réacteurs nucléaires après un incident ayant entraîné une élévation importante de température dans la partie chaude, et pour le maintien en fonctionnement d'équipements intervenant directement sur la survie de personnes ou la poursuite d'une mission, comme c'est le case notamment dans l'aéronautique, la Marine, l'aérospatiale et sur les plate-formes de forage.

De plus, ce revêtement peut être obtenu par rubannage, ce que permet d'envisager son utilisation à la demande, pour protéger certaines conduites de fluides traversant des zônes particulièrement exposées.

Ce revêtement se caractérisé principalement en ce qu'il conserve ses propriétés diélectriques et thermiques entre—200°C et 1000°C et en ce qu'il se transforme en un gel qui maintient l'isolation à hautes températures et assure l'isolation et l'étanchéité lors du refroidissement.

Il est constitué d'une couche de mica, d'un tissu de verre et d'une couche de polytétrafluorure d'éthylène (P.T.F.E.). La couche de mica est obtenue par enroulement, en une ou plusieurs couches, d'un ruban consitué d'un tissu en fibres de verre imprégné d'un liant supportant des particules de mica; la couche de polytétrafluorure d'éthylène, qui se superpose à la couche de mica, est obtenu par enroulement en une ou plusieurs couches, ou par extrusion; le tissu de verre qui se superpose à la couche de polytétrafluorure d'éthylène est obtenu par enroulement d'un ruban ou par tissage de fibres élémentaires directement par dessus la couche précédente.

La couche de mica est tournée vers le conducteur ou l'organe à protéger et cette protection est complétée par un frittage du polytétrafluorure d'éthylène qui assure l'adhérence entre les couches.

Les rubans, dont l'épaisseur est de 0.06 mm à 0.12 mm, sont enroulés avec recouvrement, par exemple, de 50% de façon à doubler l'épaisseur de la couche.

Le gel obtenu en cas d'incendie se vitrifie lors de l'abaissement de température pour constituer, avec les particules de mica qui enrobent l'élément à portéger, un revêtement isolant, diélectrique et étanche reliant l'ensemble des composants du circuit.

Ce revêtement peut être réalisé à la demande, à partir d'un ruban obtenu par superposition et adhésion des différentes couches de matériaux entrant dans la composition du complexe décrit ci-dessus, ce qui permet d'assurer la protection d'éléments ou de composants autres que des conducteurs électriques, ou de renforcer la protection au feu, d'installations existantes.

Le revêtement selon l'invention se présente sous deux formes, selon qu'il s'agit de protéger un conducteur souple, un conducteur rigide, un composant de raccordment ou un équipement de forme particulière.

Dans le cas des conducteurs, la solution idéale consiste à superposer trois couches isolantes avec un ruban en mica, une protection en polytétrafluorure d'éthylène et un tissu de verre enduit de PTFE se superpose sur l'ensemble précédent.

Dans le cas d'isolation d'éléments autres que des fils, la solution consiste à superposer trois couches isolantes avec un ruban en mica, un tissu de verre enduit de PTFE et une isolation en polytétrafluorure d'éthylène se superpose sur l'ensemble précédent.

D'autres caractéristiques et avantages apparaîtront dans la description qui va suivre d'un revêtement réalisé selon l'invention, destiné à la protection de conducteurs électriques.

Le procédé de fabrication pour les conducteurs est le suivant:

—Un ruban constitué d'un tissu en fibres de verre, imprégné d'un liant, généralement en silicone, supporte les particules de mica et est enroulé, de préférence, de façon que les particules de mica soient tournées vers le conducteur, en une ou plusieurs couches.

—Une couche de polytétrafluorure d'éthylène est obtenue par enroulement, par dessus la couche précédente, d'un ruban, ou par extrusion.

—Un tissu de fibres de verre est superposé à la couche de polytétrafluorure d'éthylène par rubannage ou tissage de fibres élémentaires directement autour des couches précédentes.

Cette protection est complétée par un frittage du polytétrafluorure d'éthylène, qui se présente sous la forme d'imprégnation dans le cas du tissu du verre ou de l'enrobage des fibres dans le cas du tressage direct, et de la couche continue obtenue par rubannage ou par extrusion. Ce frittage a pour effet d'obtenir l'adhérence des deux couches supérieures et une certaine adhérence de la couche de polytétrafluorure d'éthylène avec le ruban supportant les particules de mica, lorsque celles-ci sont tournées vers le conducteur.

Selon une variante, la protection des conducteurs souples peut être obtenue par superposition d'un ruban en mica, tel que défini précédemment, d'un tissu de verre, sous la forme d'une tresse ou d'un ruban, et d'une isolation en polytétrafluorure d'éthylène obtenue par rubannage ou extrusion.

Cette protection est complétée par un traitement de solidarisation par frittage analogue à celui décrit dans le cas précédent.

Les opérations de rubannage s'effectuent avec un recouvrement choisi de façon qu'en tous points de la périphérie du câble, il y ait une ou plusieurs épaisseurs de chacun des rubans dont la largeur et l'épaisseur sont définies en fonction du diamètre du fil.

Le mica est tourné vers le conducteur de façon à faciliter le dénudage qui précède les opérations de raccordement et à obtenir une pellicule de mica enrobée de verre après solidification du gel obtenu à très haute température, afin de faciliter la désolidarisation du revêtement en cas de nécessité.

La transformation du revêtement, par chauffage à environ 1000°C puis refroidissement, gelification et solidification, peut être recherchée à priori sur des installations rigides, sur lesquelles une étanchéité parfaite est nécessaire, afin, par exemple, de mettre les composants entrant dans leur constitution à l'abri d'une ambiance agressive ou humide.

En effet, le revêtement selon l'invention, peut être étendu, par rubannage, aux autres élément du circuit de façon qu'après gélification et solidification du revêtement, l'ensemble de l'installation se trouve enrobé de verre, de façon continue et, par conséquent, étanche.

Le revêtement selon l'invention est destiné principalement à la protection contre l'incendie, de conducteurs électriques, de conduits de fluides, de composants de raccordement ou d'équipements.

Il s'applique tout particulièrement à la protection des circuits électrique de commande, d'éclaireage ou de sécurité, dans les industries nucléaires, chimiques, pétrolières, aéronautiques, navales et spatiales.

Bien entendu, l'invention n'est par limitée aux exemples de réalisation ci-dessus décrits, à partir desquels on pourra prévoir d'autres formes et d'autres modes de réalisation.

## Revendications

1. Revêtement isolant constitué de trois couches isolantes avec un ruban de mica et une couche de PTFE superposée sur le ruban mica caractérisée en ce que une couche de tissu de verre enduit de PTFE se superpose sur l'ensemble précédent.

2. Revêtement isolant constitué de trois couches isolantes avec un ruban de mica et une couche de tissu de verre enduit de PTFE superposé sur le ruban mica, caractérisé en ce que une couche de PTFE se superpose sur l'ensemble précédent.

3. Revêtement isolant selon la revendication 1 ou 2 caractérisé en ce que le ruban de mica est réalisé par enroulement en une ou plusieurs couches d'un ruban constitué d'un tissue de fibre de verre imprégné d'un liant supportant des particules de mica.

4. Revêtement isolant selon la revendication 1 ou 2, caractérisé en ce que la couche de PTFE est obtenue par enroulement d'un ruban en une ou plusieurs couches ou par extrusion.

5. Revêtement isolant selon la revendication 1 ou 2, caractérisé en ce que la couche de tissu de verre enduit de PTFE est obtenue par enroulement d'un ruban ou par tissage de fibres élémentaires directement par dessus la couche précédente.

6. Revêtement isolant selon la revendication 3, caractérisé en ce que le ruban a sa face micacée tournées de préférence vers l'élément à isoler.

7. Revêtement isolant selon la revendication 1 ou 2, caractérisé en ce que l'adhérence entre les trous couches est renforcée par un frittage du PTFE.

8. Revêtement isolant diélectrique et étanche consitué d'une matière vitrifiée susceptible d'être obtenue par enrobage des trois couches isolantes selon les revendications 1 ou 2, suivi d'un traitement à température élevée à environ 1000°C.

## Patentansprüche

1. Isolierüberzug aus drei isolierenden Schichten mit einem Mikaband und einer über das Mikaband gelegten Polytetrafluorethylenschicht (PTFE), dadurch gekennzeichnet, daß auf diese Anordnung eine mit PTFE bestrichene Glasgewebeschicht aufgelegt ist.

2. Isolierüberzug aus drei isolierenden Schichten mit einem Mikaband und einer über das Mikaband gelegten, mit PTFE bestrichenen Glasgewebeschicht, dadurch gekennzeichnet, daß auf diese Anordnung eine PTFE-Schicht aufgelegt ist.

3. Isolierüberzug nach Anspruch 1 oder 2, dadurch gekennzeichnet, daß das Mikaband durch Wickeln einer oder mehrerer Schichten eines Bands aus einem Glasfasergewebe, das mit einem die Mikateilchen tragenden Bindemittel imprägniert ist, erhalten wird.

4. Isolierüberzug nach Anspruch 1 oder 2, dadurch gekennzeichnet, daß die PTFE-Schicht durch Wickeln einaf Bands in einer oder mehreren Schichten oder durch Extrusion erhalten wird.

5. Isolierüberzug nach Anspruch 1 oder 2, dadurch gekennzeichnet, daß die mit PTFE bestrichene Glasgewebeschicht durch Wickeln eines Bands oder durch Weben von Grundfasern direkt auf die vorhergehende Schicht erhalten wird.

6. Isolierüberzug nach Anspruch 3, dadurch gekennzeichnet, daß die Mikaseite des Bands vorzugsweise gegen das zu isolierende Element gerichtet ist.

7. Isolierüberzug nach Anspruch 1 oder 2, dadurch gekennzeichnet, daß die Haftung zwischen den drei Schichten durch Sintern des PTFE verstärkt wird.

8. Dielektrischer und dichter Isolierüberzug aus einem gesinterten Material, erhältlich durch Umhüllen der drei isolierenden Schichten nach Anspruch 1 oder 2 und anschließende Behandlung bei einer Temperatur von etwa 1000°C.

## Claims

1. Insulating coating constituted by three insulating layers with a mica tape and a layer of PTFE on the mica tape, characterized in that a layer of glass fibre fabric coated with PTFE is superposed on the preceding assembly.

2. Insulating coating constituted by three insulating layers with a mica tape and a layer of glass fibre fabric coated with PTFE superposed on the mica tape, characterized in that a PTFE layer is superposed on the preceding assembly.

3. Insulating coating according to claim 1 or 2, characterized in that the mica tape is made by winding, in one or more layers of a ribbon constituted by a glass fibre fabric impregnated with a binding agent supporting particles of mica.

4. Insulating coating according to claim 1 or 2, characterized in that the PTFE layer is obtained by winding a ribbon in one or more layers or by extrusion.

5. Insulating coating according to claim 1 or 2, characterized in that the layer of glass fibre fabric coated with PTFE is obtained by winding a ribbon or by braiding elementary fibres directly on the preceding layer.

6. Insulating coating according to claim 3, characterized in that the tape has its mica face preferably turned towards the element to be insulated.

7. Insulating coating according to claim 1 or 2, characterized in that adhesion between the three layers is reinforced by a sintering of PTFE.

8. Dielectric and tight insulating coating constituted by a glassed material adapted to be obtained by coating with the three insulating layers according to claims 1 or 2, followed by a treatment at high temperature reaching to about 1000°C.